# EUROPEAN PATENT SPECIFICATION

(11) **EP 4 084 437 B1**
(45) Date of publication and mention of the grant of the patent: **02.07.2025**
(21) Application number: 21775215.3
(22) Date of filing: 01.03.2021
(51) Int. Cl.: H04L 67/1095, G06F 11/14

(54) **DATA TRANSMISSION METHOD, TERMINAL, AND COMPUTER-READABLE STORAGE MEDIUM**
DATENÜBERTRAGUNGSVERFAHREN, VORRICHTUNG UND COMPUTERLESBARES SPEICHERMEDIUM
PROCÉDÉ DE TRANSMISSION DE DONNÉES, TERMINAL ET SUPPORT DE STOCKAGE LISIBLE PAR ORDINATEUR

(30) Priority: 24.03.2020 CN 202010212684
(43) Date of publication of application: 02.11.2022
(73) Proprietor: ZTE Corporation, Shenzhen, Guangdong 518057 (CN)
(72) Inventor: YAN, Xubing, Shenzhen, Guangdong 518057 (CN)
(74) Representative: WBH Wachenhausen Patentanwälte PartG mbB
(86) International application number: PCT/CN2021/078457
(87) International publication number: WO 2021/190246

(56) References cited:
- CN-A- 104 572 478
- CN-A- 105 138 422
- CN-A- 107 908 367
- CN-A- 109 857 737
- US-A1- 2010 274 982

## Description

### TECHNICAL FIELD

Embodiments of the present application relate to, but not limited to, the technical field of information, and in particular, to a data transmission method, a terminal device, and a computer-readable storage medium.

### BACKGROUND

In the era of the vigorous development of the Internet of Everything, various devices which were separated before have been connected together by the network. In this case, there are more and more application scenarios of remote management terminal devices. Data are transmitted between a terminal device and a server through a specific connection protocol to carry out actions necessary for initialization and operation management, such as service subscription, function setting, file uploading and downloading and device diagnosis.

When remotely managing the terminal device, the server needs to continuously acquire a large amount of information of the terminal device, such as data rate and total data traffic. In order to maintain such continuous collection of mass data, the terminal device is required to be able to accurately and quickly acquire and upload terminal device data (e.g., data rate and total data traffic) to the server. In some cases, the terminal device will first store real-time data, such as data rate and total data traffic, into a terminal device resource, such as a nonvolatile memory, so as to ensure that the original data will not be lost after the terminal device is restarted or abnormal, and then reads related data from the terminal device resource, such as the nonvolatile memory, and sends the related data to the server.

However, the terminal device data stored in the terminal device resource such as the nonvolatile memory, will be constantly updated due the change of the service function of the terminal device. Moreover, when the server acquires the data of the terminal device, the terminal device needs to constantly read the terminal device resource such as the nonvolatile memory. In this case, the frequency of reading and writing the terminal device resource such as the nonvolatile memory, will be very high, thus affecting the service life and stability of such terminal device resource.

In CN109857737A, a cold and hot data storage method and device and an electronic device are disclosed. The method comprises: backing up hot data in a hot database to a cold database; determining whether target hot data converted into cold data exist in the hot database or not; and if the target hot data exists, deleting the target hot data from the hot database. The hot database is used for storing hot data, while the cold database is used for storing cold data. The hot data is data with the data access frequency greater than or equal to the preset access frequency within the target time length, while the cold data is data with the data access frequency less than the preset access frequency within the target time length.

In CN 104572478A, a data access method and device are disclosed. The method is applied to electronic equipment comprising a storage device. The storage device at least comprises a first storage area and a second storage area. The first storage area has the first access performance, while the second storage area has the second access performance. The first access performance is superior to the second access performance, and the first storage area and the second storage area respectively comprise a plurality of storage units. The method comprises: receiving a data movement command; determining whether the first storage units exist in the first storage area or not, wherein the first storage units are used for storing first data; in response to the first storage units being existent, moving the first data from the first storage units to the second storage units in the second storage area.

In CN105138422A, a control method applied to an electronic device are disclosed. A storage unit is arranged in the electronic device. The method comprises: acquiring data information stored in the storage unit; detecting access frequency of a user to the data information in a predetermined time frame; dividing the data information into first data and second data according to the access frequency, wherein the first data is used for representing data which the access frequency of the user is greater than a first threshold value, and the second data is used for representing data which the access frequency of the user is smaller than the first threshold value; and carrying out backup processing on the first data by using a first strategy, and carrying out backup processing on the second data by using a second strategy.

### SUMMARY

The following is a summary of the topic described in detail herein. This summary is not intended to limit the protection scope of the claims.

The features of the data transmission method, the terminal device and the computer-readable storage medium according to embodiments of the present disclosure are set out in the appended set of claims.

Other features and advantages of the present application will be set forth in the following description, and will partially become apparent from the description, or may be understood by practicing the present application. The objective and other advantages of the present application can be achieved and obtained by the structure particularly specified in the description, the claims and the accompanying drawings.

### BRIEF DESCRIPTION OF DRAWINGS

The accompanying drawings are provided for a further understanding of the technical schemes of the present application and constitute a part of the description. The accompanying drawings and the embodiments of the present application are used to illustrate the technical schemes of the present application, but do not constitute a limitation to the technical schemes of the present application.
FIG. 1 is a schematic diagram of an architecture platform for executing a data transmission method according to an embodiment of the present application;
FIG. 2 is a flowchart of a data transmission method according to an embodiment of the present application;
FIG. 3 is a flowchart of a data transmission method according to another embodiment of the present application;
FIG. 4 is a flowchart of a data transmission method according to yet another embodiment of the present application;
FIG. 5 is a flowchart of a mutual conversion between hot data and cold data in a data transmission method according to yet another embodiment of the present application; and
FIG. 6 is a schematic diagram of a terminal device according to an embodiment of the present application.

### DETAILED DESCRIPTION

In order to make the objective, technical scheme and advantages of the present application clearer, the present application will be further described in detail below in conjunction with the accompanying drawings and embodiments. It should be understood that the specific embodiments described herein are merely intended to illustrate the present application, and are not intended to limit the present application.

It should be noted that, although functional modules are divided in the schematic diagram of the device and logical orders are shown in the flowcharts, in some cases, the modules may be divided in a different manner, or the steps shown or described may be executed in an order different from the orders as shown in the flowcharts. The terms "first", "second" and the like in the description, the claims and the above accompanying drawings are used to distinguish similar objects, and are not necessarily used to describe a specific sequence or a precedence order.

Embodiments of the present application provide a data transmission method, a terminal device, and a computer-readable storage medium. When the terminal device acquires first data and needs to send the first data to a server, particularly when the first data includes a large quantity of real-time data, the first data is stored as hot data and transmitted to the server. Because the hot data will be stored in a memory which can be conveniently and quickly accessed, in the process of the terminal device frequently reading the hot data and transmitting the hot data to the server, the frequency of reading and writing a terminal device resource, such as a nonvolatile memory, can be decreased, thereby increasing the stability of the terminal device resource. In addition, the hot data is backed up as the cold data according to a running time of the terminal device. Because the cold data will be stored in the terminal device resource such as a nonvolatile memory, the hot data can be stored as a backup, so that the original data will not be lost even if the terminal device is restarted or abnormally started or shut down. In addition, because the cold data can be transmitted to the server according to a running state of the terminal device, even if the terminal device is restarted or abnormally started or shut down, when the terminal device is restarted, historical data stored as the cold data may be transmitted to the server, and thus the remote management of the terminal device by the server can be maintained.

The embodiments of the present application will be further set forth below with reference to the accompanying drawings.

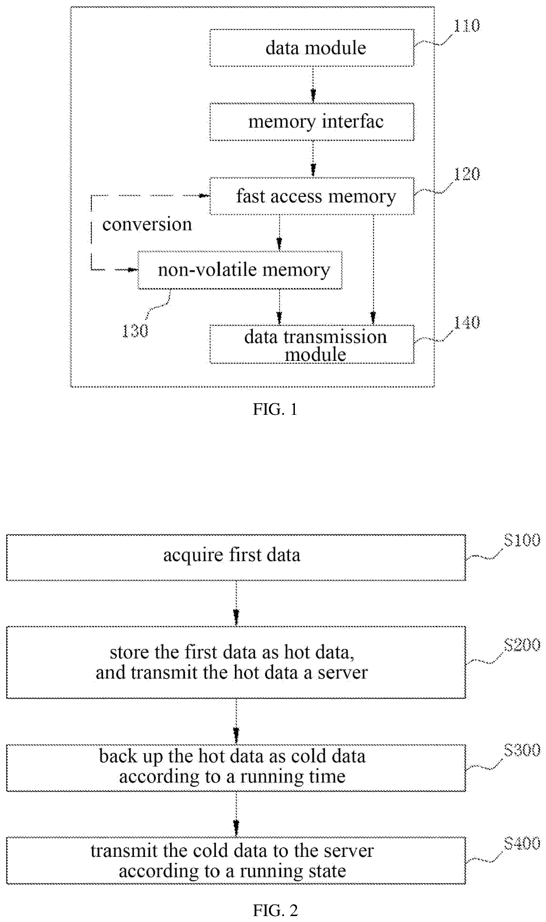

As shown in FIG. 1, FIG. 1 is a schematic diagram of an architecture platform for executing a data transmission method according to an embodiment of the present application. In the example of FIG. 1, the architecture platform may be applied to a smart terminal device, such as a smartphone, a tablet personal computer, a desktop computer, a laptop or a smart television. The architecture platform includes a data module 110, a fast access memory 120, a nonvolatile memory 130, and a data transmission module 140. The data module 110 is connected to the fast access memory 120 through a memory interface, the fast access memory 120 is connected to the nonvolatile memory 130, and the fast access memory 120 and the nonvolatile memory 130 are connected to the data transmission module 140, respectively.

The data module 110 is configured to provide detailed mass real-time data (e.g., user data and metadata) all the time. The user data may be user database files, etc. The metadata may be volume sizes of volumes, a network address of a memory controller, a replication policy, and other data used by a file system or the memory controller, etc. The fast access memory 120 is configured to store the real-time data provided by the data module 110 as hot data, so that a large quantity of real-time data can be read and written frequently without affecting the stability of the terminal device resource. The hot data is data that does not need to be stored for a long time, but needs to be accessed frequently. The nonvolatile memory 130 is configured to back up the hot data in the fast access memory 120 as the cold data, so that the original data will not be lost when the terminal device is restarted or abnormally started or shut down. The cold data is data that needs to be stored for a long time but does not need to be accessed frequently. The data transmission module 140 is configured to send the hot data in the fast access memory 120 or the cold data in the nonvolatile memory 130 to the server according to a mobile transport protocol, so as to implement the remote management of the terminal device by the server. In an embodiment, when the data transmission module 140 sends data to the server, the data transmission module 140 packs the data first, for example, by a Simple Object Access Protocol (SOAP), into a SOAP packet, and then sends the SOAP packet to the server according to the Hyper Text Transfer Protocol (HTTP).

The architecture platform described in the embodiment of the present application is intended to illustrate the technical schemes of the embodiments of the present application more clearly, and does not constitute a limitation to the technical schemes provided by the embodiments of the present application. As will be known by those having ordinary skill in the art, with the development of terminal device technology and the emergence of new application scenarios, the technical schemes provided by the embodiments of the present application are also applicable to similar technical problems.

It can be understood by those having ordinary skill in the art that the structural relationship between the various modules and devices shown in FIG. 1 does not constitute a limitation to the embodiments of the present application, and may include more or less components than those shown, combine some components, or arrange different components.

In the architecture platform shown in FIG. 1, various modules and devices may cooperate with one another to implement the data transmission method.

Based on the aforementioned architecture platform and the structural relationship between each module and each device in the aforementioned architecture platform, various embodiments of the data transmission method of the present application are proposed.

As shown in FIG. 2, FIG. 2 is a flowchart of a data transmission method according to an embodiment of the present application. The method includes, but not limited to, step S100, step S200, step S300 and step S400.

At S 100, first data is acquired.

In an embodiment, the first data may be data generated by a terminal device itself, e.g., log data, data rate, data traffic and other data generated when the terminal device maintains its normal operation. In addition, the first data may also be data generated based on the operation of a user, e.g., various data generated by an application of the terminal device when the user uses the application.

In an embodiment, the first data may include user data or metadata. The user data may be user database files, etc. The metadata may be volume sizes of volumes, a network address of a memory controller, a replication policy, and other data used by a file system or the memory controller, etc.

In an embodiment, after the first data is acquired, related analysis and processing may be performed on the first data, so that corresponding operations can be performed on the first data in the subsequent steps.

At S200, the first data is stored as hot data, and the hot data is transmitted to a server.

In an embodiment, the hot data may be data which is being accessed at a frequency higher than a threshold frequency, e.g., metadata frequently modified by a file system. The threshold frequency may be appropriately selected according to actual usage, which is not specifically limited in the present embodiment. After the first data is acquired, the first data may be stored in a fast access memory and may be marked with a hot data attribute, that is, the first data may be stored as hot data. When the first data is stored as hot data, the hot data (i.e., the first data) may be synchronously read from the fast access memory and transmitted to the server, so as to implement the remote management of the terminal device by the server.

Illustration will be given below by way of a specific example.

In an embodiment, referring to the architecture platform shown in FIG. 1, the data module provides detailed mass first data (real-time data) to the fast access memory through the memory interface. When the fast access memory stores the first data as hot data, the data transmission module may simultaneously read the hot data from the fast access memory and send the hot data to the server according to a mobile transport protocol, so as to implement the remote management of the terminal device by the server.

At S300, the hot data is backed up as the cold data according to a running time.

In an embodiment, the cold data may be user data which is being accessed at a frequency lower than a threshold frequency. The threshold frequency may be appropriately selected according to actual usage, which is not specifically limited in the present embodiment. When the running time meets a certain condition, e.g., reaching a certain running time or meeting a certain running period, the hot data (i.e., the first data) in the fast access memory may be backed up as the cold data, so that the original data will not be lost when the terminal device is restarted or abnormally started or shut down. In an embodiment, both the running time and the running period may be appropriately selected according to actual usage, which is not specifically limited in the present embodiment.

It should be noted that the process of backing up the hot data as the cold data according to the running time will not affect the operation of transmitting the hot data to the server.

Illustration will be given below by way of a specific example.

In an embodiment, referring to the architecture platform shown in FIG. 1, the fast access memory continuously stores first data from the data module as hot data, and the stored hot data is continuously sent to the data transmission module. When a certain running time is reached, for example, after the running time reaches 5 seconds, the first data stored in the fast access memory may be read out and stored in the nonvolatile memory, and the first data stored in the nonvolatile memory is marked with a cold data attribute. That is, the hot data stored in the fast access memory is backed up as the cold data stored in the nonvolatile memory, so that the original data of the terminal device will not be lost even if the terminal device is restarted or abnormally started or shut down.

At S400, the cold data is transmitted to the server according to a running state.

In an embodiment, the running state includes various different states of the terminal device, such as a normal running state and a restarted state. For example, when the terminal device is in the normal running state, the terminal device can send the cold data stored in the nonvolatile memory to the server according to an instruction of the server. For another example, when the terminal device is in the restarted state, after the terminal device is started normally, the terminal device first read historical data, such as historical data rate and traffic, from the cold data stored in the nonvolatile memory, and then transmit the historical data to the server, so that the remote management of the terminal device by the server can be maintained.

In an embodiment, by adopting the data transmission method including the steps of S100, S200, S300 and S400, when the terminal device sends data to the server, the frequency of reading and writing a terminal resource such as a nonvolatile memory can be decreased, so that the stability of the terminal resource can be increased. In addition, since the hot data may be backed up as the cold data according to the running time of the terminal device, when the terminal device is restarted or abnormally started or shut down, the original data of the terminal device will not be lost. Further, since the cold data may also be transmitted to the server according to the running state of the terminal device, even if the terminal device is restarted or abnormally started or shut down, when the terminal device is restarted, the historical data stored as the cold data may be transmitted to the server, so that the remote management of the terminal device by the server can be maintained. Furthermore, in an embodiment, since the first data transmitted to the server can be separately stored as hot data and cold data, that is, the hot data is stored in the fast access memory and the cold data is stored in the terminal resource such as the nonvolatile memory, the situation of frequently reading the terminal resource such as the nonvolatile memory, in a short time in some cases can be avoided, thereby increasing the execution speed of a program of the terminal device and prolonging the service life of the memory of the terminal device to some extent.

In addition, in an embodiment, the running time in S300 includes a transmission time of the hot data, and then in this embodiment, S300 may include the following step.

At S310, the hot data is backed up as the cold data according to the transmission time of the hot data.

In an embodiment, the transmission time of the hot data may be a time for the data transmission module to read the hot data from the fast access memory, or a time for the data transmission module to transmit the hot data to the server. In the process of the fast access memory continuously storing the first data from the data module as hot data, the fast access memory will also continuously send the stored hot data to the data transmission module. In the process of continuously transmitting the hot data, e.g., in the process of the data transmission module reading the hot data from the fast access memory or the data transmission module transmitting the hot data to the server, in order to avoid data loss caused by the terminal device being restarted or abnormally started or shut down, the hot data may be backed up as the cold data according to the transmission time of the hot data, so that the original data will not be lost when the terminal device is restarted or abnormally started or shut down.

In addition, in an embodiment, S310 includes, but not limited to, the following step.

At S311, when the transmission time of the hot data reaches a set time, the hot data is backed up as the cold data.

In an embodiment, when the transmission time of the hot data reaches the set time, e.g., when the time for the data transmission module to read the hot data from the fast access memory reaches the set time or when the time for the data transmission module to transmit the hot data to the server reaches the set time, in order to avoid data loss caused by the terminal device being restarted or abnormally started or shut down, the hot data may be backed up as the cold data, so that the original data will not be lost when the terminal device is restarted or abnormally started or shut down.

In an embodiment, the set time may be 5 seconds or 10 seconds, and may be appropriately selected according to actual usage, which is not specifically limited in the present embodiment.

In addition, in an embodiment, the running state at S400 includes a restarted state, and then in this embodiment, S400 may include the following step.

At S410, in the restarted state, the cold data is transmitted to the server.

In an embodiment, when the terminal device is in the restarted state, after the terminal device is started normally, the terminal device may read historical data such as historical data rate and traffic, from the cold data stored in the nonvolatile memory first, and then transmit the historical data to the server, so that the remote management of the terminal device by the server can be maintained.

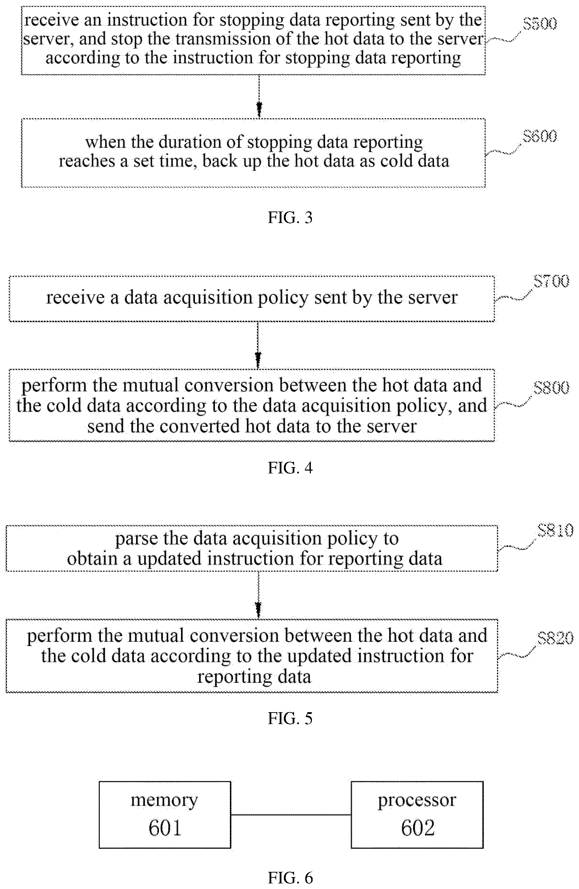

In addition, referring to FIG. 3, in an embodiment, the data transmission method further includes the following steps.

At S500, an instruction of stopping data reporting sent by the server is received, and the transmission of the hot data to the server is stopped according to the instruction of stopping data reporting stop.

At S600, when the duration of stopping data reporting reaches a set time, the hot data is backed up as the cold data.

In an embodiment, in the process of the server acquiring the real-time data of the terminal device, there may be a case that the server temporarily does not require the terminal device to upload the real-time data. At this point, the server will issue the instruction of stopping data reporting to the terminal device. After receiving the instruction of stopping data reporting sent by the server, the terminal device will stop the transmission of the hot data to the server according to the instruction of stopping data reporting. It should be noted that the process of backing up the hot data as the cold data is independent of the process of the terminal device sending the hot data to the server. Therefore, even if the terminal device stops the transmission of the hot data to the server according to the instruction of stopping data reporting, the terminal device can still back up the hot data as the cold data, so that the original data will not be lost when the terminal device is restarted or abnormally started or shut down.

In an embodiment, when the duration of stopping data reporting reaches the set time, in order to avoid data loss caused by the terminal device being restarted or abnormally started or shut down, the hot data may be backed up as the cold data, so that the original data will not be lost when the terminal device is restarted or abnormally started or shut down. It should be noted that the terminal device stopping data reporting does not mean that the terminal device stops operation, and on the contrary the terminal device will continue to generate a large quantity of new real-time data. Therefore, the duration for which the terminal device has stopped data reporting is a running time of the terminal device, and when the duration of stopping data reporting reaches the set time, that is, when the running time of the terminal device reaches the set time, the terminal device will back up the hot data as the cold data.

In an embodiment, the set time may be 5 seconds or 10 seconds, and may be appropriately selected according to actual usage, which is not specifically limited in the present embodiment.

In addition, referring to FIG. 4, in an embodiment, the data transmission method further includes the following steps.

At S700, a data acquisition policy sent by the server is received.

At S800, a mutual conversion between the hot data and the cold data is performed according to the data acquisition policy, and the converted hot data is sent to the server.

In an embodiment, with the change of an application scenario, the server may change the policy of acquiring the real-time data type of the terminal, and therefore it is required to acquire terminal device data matching the changed application scenario, so as to ensure that the server can remotely manage the terminal device. In this case, the terminal device receives the data acquisition policy sent by the server, perform the mutual conversion between the hot data and the cold data according to the data acquisition policy, and then sends the converted hot data to the server, so as to meet the requirement of the remote management of the terminal device by the server.

In an embodiment, there may be different policy types of the data acquisition policy sent by the server. For example, the data acquisition policy may be related to application scenarios, such as acquiring user data of the terminal device in a first scenario and acquiring metadata of the terminal device in a second scenario. For another example, the data acquisition policy may be related to a running state of the terminal device, for example, when the terminal device is in the normal running state, the data of the terminal device stored in the fast access memory is acquired; when the terminal device is in the restarted state, the data of the terminal device stored in the nonvolatile memory is acquired.

In an embodiment, when the data acquisition policy indicates that the data to be acquired is stored in the nonvolatile memory, it means that the terminal device needs to frequently read the terminal device data originally stored as the cold data. In order to decrease the frequency of reading the nonvolatile memory and increase the stability of the terminal resource, the terminal device may perform the mutual conversion between the hot data and the cold data first according to the data acquisition policy, so that the temporary data originally stored as hot data is stored as the cold data, while the terminal device data originally stored as the cold data is stored as hot data. Then, the terminal device sends the converted hot data to the server, thereby ensuring that the server can perform subsequent remote management on the terminal device.

In addition, referring to FIG. 5, in an embodiment, the process of performing a mutual conversion between the hot data and the cold data at S800 includes, but not limited to, the following steps.

At S810, the data acquisition policy is parsed to obtain an updated instruction of reporting data.

At S820, the mutual conversion between the hot data and the cold data is performed according to the updated instruction of reporting data.

In an embodiment, after receiving the data acquisition policy sent by the server, the terminal device parses the received data acquisition policy first to obtain an updated instruction of reporting data carried by the data acquisition policy, and performs the mutual conversion between the hot data and the cold data according to the updated instruction of reporting data, so that the terminal device can send updated data required by the server to the server, and thus the server can maintain the remote management of the terminal device.

In an embodiment, the terminal device may parse the data acquisition policy according to a mobile transport protocol adopted by the terminal device. For example, if the terminal device adopts the SOAP to pack data, the terminal device adopts the SOAP to parse the data acquisition policy, so as to obtain the updated instruction of reporting data carried in an SOAP packet.

In an embodiment, there may be different instruction types of the updated instruction of reporting data. For example, the updated instruction of reporting data may be aimed at the updating of specific data or a set of data.

In an embodiment, if the updated instruction of reporting data updates specific data, for example, the server updates the log data of the terminal device that was originally required to be acquired continuously to be acquired into the user data of the terminal device, since the data originally required to be acquired by the server is the log data of the terminal device, i.e. the log data which originally needs to be frequently read by the terminal device, the log data is originally stored in the fast access memory; after receiving the updated instruction of reporting data sent by the server, the terminal device determines that it is no longer required to read the log data frequently, but it is required to read the user data frequently. Therefore, the terminal device stores the user data originally stored as the cold data as hot data and the log data originally stored as hot data as the cold data, so that in the process of the terminal device subsequently frequently reading the user data, the frequent reading of the terminal resource such as the nonvolatile memory can be avoided, thereby increasing the stability of the terminal resource.

In an embodiment, if the updated instruction of reporting data updates a set of data, for example, the server originally requested to acquire data A, data B and data C of the terminal device, among which data A and data C are frequently acquired and data B are occasionally acquired by the server, in order to decrease the frequency of the terminal device reading the nonvolatile memory so as to increase the stability of the terminal resource, the terminal device stores data A and data C as hot data and data B as the cold data; after the terminal receives the updated instruction of reporting data sent by the server, and the updated instruction of reporting data indicates that the server needs to frequently acquire data B and occasionally acquire data A and data C, the terminal device stores data A and data C originally stored as hot data as the cold data and data B originally stored as the cold data as hot data. Therefore, in the process of the terminal device subsequently frequently reading data B, the frequent reading of the terminal resource such as the nonvolatile memory can be avoided, thus increasing the stability of the terminal resource.

In addition, in an embodiment, the data transmission method further includes the following step.

At S900, a result of conversion between the hot data and the cold data is sent to the server.

In an embodiment, after the terminal device performs the mutual conversion between the hot data and the cold data according to the data acquisition policy sent by the server, the terminal device will feed back a result of conversion between the hot data and the cold data according to the data acquisition policy to the server, so that the server may perform subsequent data acquisition operation according to the result of conversion, so as to maintain the remote management of the terminal device by the server.

In an embodiment, the result of conversion between the hot data and the cold data includes successful conversion and unsuccessful conversion. If the result of conversion is successful conversion, the server may request the terminal device to upload real-time data according to the result of conversion indicating successful conversion. If the result of conversion is unsuccessful conversion, the server may resend the data acquisition policy to the terminal device according to the result of conversion indicating unsuccessful conversion, or the server may maintain the original data acquisition policy instead of adopting a new data acquisition policy. The processing operation which is performed by the server according to the result of conversion may be appropriately selected according to actual application, which is not specifically limited by the present embodiment.

In addition, referring to FIG. 6, an embodiment of the present application further provides a terminal device, which includes a memory 601, a processor 602, and a computer program stored in the memory 601 and executable by the processor 602.

The processor and the memory may be connected through a bus or in other ways.

As a non-transitory computer-readable storage medium, the memory may be configured to store a non-transitory software program and a non-transitory computer-executable program. In addition, the memory may include a high-speed random access memory, and may also include a non-transitory memory, e.g., at least one disk storage device, flash memory device or other non-transitory solid-state storage devices. In some embodiments, the memory may include memories arranged remotely relative to the processor, and these remote memories may be connected to the processor through a network. Examples of the aforementioned network include, but not limited to, the Internet, an intranet, a local area network, a mobile communication network, and combinations thereof.

It should be noted that the terminal device in the present embodiment may include the architecture platform shown in the embodiment of FIG. 1. The terminal device in the present embodiment and the architecture platform in the embodiment shown in FIG. 1 belong to the same inventive concept, so the terminal device and the architecture platform have the same implementation principle and technical effect, which will not be described in detail herein.

The non-transitory software program and instructions required to implement the data transmission method of the aforementioned embodiment are stored in the memory which, when executed by the processor, cause the processor to implement the data transmission method of the aforementioned embodiment, e.g., the aforementioned method steps S100 to S400 in FIG. 2, S500 and S600 in FIG. 3, S700 and S800 in FIG. 4 and S810 and S820 in FIG. 5.

The embodiment of the terminal device described above are merely schematic, in which the units illustrated as separate components may or may not be physically separated, that is, the units may be located in one place or distributed on a plurality of network units. Some or all of the modules may be selected according to actual needs to achieve the objective of the scheme of the present embodiment.

In addition, an embodiment of the present application further provides a computer-readable storage medium storing computer-executable instructions which, when executed by a processor or a controller, e.g., the processor in the aforementioned embodiment of the terminal device, cause the processor to implement the data transmission method in the aforementioned embodiment, e.g., the aforementioned method steps S100 to S400 in FIG. 2, S500 and S600 in FIG. 3, S700 and S800 in FIG. 4 and S810 and S820 in FIG. 5.

An embodiment of the present application provides a data transmission method, a terminal device and a computer-readable storage medium, which can increase the stability of a terminal resource.

The embodiment of the present application includes: acquiring first data; storing the first data as hot data and transmitting the hot data to a server; backing up the hot data as the cold data according to a running time; and transmitting the cold data to the server according to a running state. According to the scheme provided by the embodiments of the present application, when the terminal device acquires first data and needs to send the first data, particularly, including a large quantity of real-time data, to a server, the first data is stored as hot data, and the hot data is transmitted to the server. Because the hot data will be stored in a memory which can be conveniently and quickly accessed, in the process of the terminal device frequently reading the hot data and transmitting the hot data to the server, the frequency of reading and writing a terminal device resource such as a nonvolatile memory can be decreased, thereby increasing the stability of the terminal device resource. **In** addition, the hot data is backed up as the cold data according to the running time of the terminal device. Because the cold data will be stored in the terminal device resource such as a nonvolatile memory, the hot data can be stored as a backup, so that the original data will not be lost even if the terminal device is restarted or abnormally started or shut down. Further, because the cold data can be transmitted to the server according to a running state of the terminal device, even if the terminal device is restarted or abnormally started or shut down, when the terminal device is restarted, the historical data stored as the cold data may be transmitted to the server, and thus the remote management of the terminal device by the server can be maintained.

It can be understood by those having ordinary skill in the art that all or some of the steps in the method and the system disclosed above may be implemented as software, firmware, hardware and an appropriate combination thereof. Some or all of the physical components may be implemented as software executed by a processor (such as a central processing unit, a digital signal processor or a microprocessor), hardware or an integrated circuit (such as an application-specific integrated circuit). Such software may be distributed on computer-readable media, which may include computer storage media (or non-transitory media) and communication media (or transitory media). As well-known to those having ordinary skill in the art, the term "computer storage media" include volatile and nonvolatile, removable and non-removable media implemented in any method or technology for storing information (such as computer-readable instructions, data structures, program modules or other data). Computer storage media include but are not limited to RAM, ROM, EEPROM, flash memory or other memory technologies, CD-ROM, digital versatile disk (DVD) or other optical disk storage, magnetic cassettes, magnetic tapes, magnetic disk storage or other magnetic storage devices or any other media that can be used to store desired information and can be accessed by computers. Furthermore, it is well-known to those having ordinary skill in the art that communication media typically contain computer-readable instructions, data structures, program modules or other data in a modulated data signal such as carriers or other transmission mechanisms, and can include any information delivery media.

Some embodiments of the present application have been described in detail above, but the present application is not limited thereto. Those having ordinary skill in the art may make various equivalent modifications or replacements without departing from the scope of the present application defined by the claims of the present application.

## Claims

1. A data transmission method, applied to a terminal device, comprising:
acquiring first data (S100);
storing the first data as hot data, and transmitting the hot data to a server (S200);
backing up the hot data as the cold data stored in a nonvolatile memory in response to a running time of the terminal device exceeding a preset threshold (S300); and
transmitting the cold data to the server according to a running state of the terminal device (S400), comprising:
in response to the terminal device being in a normal running state, sending the cold data stored in the nonvolatile memory to the server based on an instruction from the server;
in response to the terminal device being in a restarted state, reading historical data from the cold data stored in the nonvolatile memory, and transmitting the historical data to the server.

2. The data transmission method of claim 1, wherein in response to the running time comprising a transmission time of the hot data, backing up the hot data as the cold data according to a running time of the terminal device (S300) comprises:
backing up the hot data as the cold data according to the transmission time of the hot data.

3. The data transmission method of claim 2, wherein backing up the hot data as the cold data according to the transmission time of the hot data comprises:
in response to the transmission time of the hot data reaching a set time, backing up the hot data as the cold data.

4. The data transmission method of claim 1, further comprising:
receiving an instruction of stopping data reporting sent by the server, and stopping the transmission of the hot data to the server according to the instruction of stopping data reporting (S500); and
in response to a duration of stopping the data reporting reaching a set time, backing up the hot data as the cold data (S600).

5. The data transmission method of claim 1, further comprising:
receiving a data acquisition policy sent by the server (S700); and
performing a mutual conversion between the hot data and the cold data according to the data acquisition policy, and sending the converted hot data to the server (S800).

6. The data transmission method of claim 5, wherein performing a mutual conversion between the hot data and the cold data according to the data acquisition policy (S800) comprises:
parsing the data acquisition policy to obtain a updated instruction of reporting data (S810); and
performing the mutual conversion between the hot data and the cold data according to the updated instruction of reporting data (S820).

7. The data transmission method of claim 5 or 6, further comprising:
sending a result of conversion between the hot data and the cold data to the server.

8. A terminal device, comprising a memory (601), a processor (602), and a computer program stored in the memory (601) and executable by the processor (602), wherein the computer program, when executed by the processor (602), causes the processor (602) to perform the data transmission method of any of claims 1 to 7.

9. A computer-readable storage medium, storing computer-executable instructions which, when executed by a processor, causes the processor to perform the data transmission method of any of claims 1 to 7.

## Patentansprüche

1. Datenübertragungsverfahren, das auf ein Endgerät angewendet wird, umfassend:
Erfassen erster Daten (S100);
Speichern der ersten Daten als heiße Daten und Übertragen der heißen Daten an einen Server (S200);
Sichern der heißen Daten als die kalten Daten, die in einem nichtflüchtigen Speicher gespeichert sind, als Reaktion darauf, dass eine Laufzeit des Endgeräts einen vorbestimmten Schwellenwert überschreitet (S300); und
Übertragen der kalten Daten an den Server gemäß eines Betriebszustands des Endgeräts (S400), umfassend:
als Reaktion darauf, dass sich das Endgerät in einem normalen Betriebszustand befindet, Senden der kalten Daten, die in dem nichtflüchtigen Speicher gespeichert sind, an den Server basierend auf einem Befehl von dem Server;
als Reaktion darauf, dass sich das Endgerät in einem neugestarteten Zustand befindet, Lesen von historischen Daten aus den kalten Daten, die in dem nichtflüchtigen Speicher gespeichert sind, und Übertragen der historischen Daten an den Server.

2. Datenübertragungsverfahren nach Anspruch 1, wobei als Reaktion auf die Laufzeit, die eine Übertragungszeit der heißen Daten umfasst, das Sichern der heißen Daten als die kalten Daten gemäß einer Laufzeit des Endgeräts (S300) umfasst:
Sichern der heißen Daten als die kalten Daten gemäß der Übertragungszeit der heißen Daten.

3. Datenübertragungsverfahren nach Anspruch 2, wobei das Sichern der heißen Daten als die kalten Daten gemäß der Übertragungszeit der heißen Daten umfasst:
Sichern der heißen Daten als die kalten Daten als Reaktion darauf, dass die Übertragungszeit der heißen Daten eine bestimmte Zeit erreicht.

4. Datenübertragungsverfahren nach Anspruch 1, ferner umfassend:
Empfangen eines Befehls zum Stoppen vom Server gesendeter Datenmeldung und Stoppen der Übertragung der heißen Daten an den Server gemäß des Befehls zum Stoppen der Datenmeldung (S500); und
in Reaktion darauf, dass eine Dauer des Stoppens der Datenmeldung eine bestimmte Zeit erreicht, Sichern der heißen Daten als die kalten Daten (S600).

5. Datenübertragungsverfahren nach Anspruch 1, ferner umfassend:
Empfangen einer vom Server gesendeten Datenerfassungsrichtlinie (S700); und
Durchführen einer gegenseitigen Umwandlung zwischen den heißen Daten und den kalten Daten gemäß der Datenerfassungsrichtlinie und Senden der umgewandelten heißen Daten an den Server (S800).

6. Datenübertragungsverfahren nach Anspruch 5, wobei das Durchführen einer gegenseitigen Umwandlung zwischen den heißen Daten und den kalten Daten gemäß der Datenerfassungsrichtlinie (S800) umfasst:
Parsen der Datenerfassungsrichtlinie, um einen aktualisierten Befehl zum Melden von Daten zu erhalten (S810); und
Durchführen der gegenseitigen Umwandlung zwischen den heißen Daten und den kalten Daten gemäß des aktualisierten Befehls zum Melden von Daten (S820).

7. Datenübertragungsverfahren nach Anspruch 5 oder 6, ferner umfassend:
Senden eines Ergebnisses von Umwandlung zwischen den heißen Daten und den kalten Daten an den Server.

8. Endgerät, das einen Speicher (601), einen Prozessor (602) und ein in dem Speicher (601) gespeichertes und durch den Prozessor (602) ausführbares Computerprogramm umfasst, wobei das Computerprogramm, wenn es durch den Prozessor (602) ausgeführt wird, den Prozessor (602) veranlasst, das Datenübertragungsverfahren nach einem der Ansprüche 1 bis 7 auszuführen.

9. Computerlesbares Speichermedium, das computerausführbare Befehle speichert, die, wenn sie durch einen Prozessor ausgeführt werden, bewirken, dass der Prozessor das Datenübertragungsverfahren nach einem der Ansprüche 1 bis 7 ausführt.

## Revendications

1. Procédé de transmission de données, appliqué à un dispositif terminal, le procédé comprenant les étapes suivantes :
acquérir des premières données (S100) ;
stocker les premières données en tant que données actives, et transmettre les données actives à un serveur (S200) ;
sauvegarder les données actives en tant que données inactives stockées dans une mémoire non volatile en réponse à un temps de fonctionnement du dispositif terminal dépassant un seuil prédéfini (S300) ; et
transmettre les données inactives au serveur conformément à un état de fonctionnement du dispositif terminal (S400), ce qui comprend :
en réponse au fait que le dispositif terminal se trouve dans un état de fonctionnement normal, l'envoi des données inactives stockées dans la mémoire non volatile au serveur sur la base d'une instruction provenant du serveur ;
en réponse au fait que le dispositif terminal se trouve dans un état redémarré, la lecture des données historiques à partir des données inactives stockées dans la mémoire non volatile, et la transmission des données historiques au serveur.

2. Procédé de transmission de données selon la revendication 1, dans lequel, en réponse au temps de fonctionnement comprenant un temps de transmission des données actives, la sauvegarde des données actives en tant que données inactives conformément à un temps de fonctionnement du dispositif terminal (S300) comprend : la sauvegarde des données actives en tant que données inactives conformément à un temps de transmission des données actives.

3. Procédé de transmission de données selon la revendication 2, dans lequel la sauvegarde des données actives en tant que données inactives conformément au temps de transmission des données actives comprend :
en réponse au temps de transmission des données actives atteignant un temps défini, la sauvegarde des données actives en tant que données inactives.

4. Procédé de transmission de données selon la revendication 1, le procédé comprenant en outre les étapes suivantes :
recevoir une instruction d'arrêt de signalement de données envoyée par le serveur, et arrêter la transmission des données actives au serveur conformément à l'instruction d'arrêt de signalement de données (S500) ; et
en réponse à une durée d'arrêt du signalement de données atteignant un temps prédéfini, sauvegarder des données actives en tant que données inactives (S600).

5. Procédé de transmission de données selon la revendication 1, le procédé comprenant en outre les étapes suivantes :
recevoir une politique d'acquisition de données envoyée par le serveur (S700) ; et
réaliser une conversion mutuelle entre les données actives et les données inactives conformément à la politique d'acquisition de données, et envoyer les données actives converties au serveur (S800).

6. Procédé de transmission de données selon la revendication 5, dans lequel la réalisation d'une conversion mutuelle entre les données actives et les données inactives conformément à la politique d'acquisition de données (S800) comprend les étapes suivantes :
analyser la politique d'acquisition de données pour obtenir une instruction mise à jour de communication de données (S810) ; et
effectuer la conversion mutuelle entre les données actives et les données inactives conformément à l'instruction mise à jour de communication de données (S820).

7. Procédé de transmission de données selon la revendication 5 ou la revendication 6, comprenant en outre :
l'envoi d'un résultat de conversion entre les données actives et les données inactives au serveur.

8. Dispositif terminal, comprenant une mémoire (601), un processeur (602) et un programme informatique stocké dans la mémoire (601) et étant exécutable par le processeur (602), où le programme informatique, lorsqu'il est exécuté par le processeur (602), amène le processeur (602) à exécuter le procédé de transmission de données selon l'une quelconque des revendications 1 à 7.

9. Support de stockage lisible par ordinateur, stockant des instructions exécutables par ordinateur qui, lorsqu'elles sont exécutées par un processeur, amènent le processeur à exécuter le procédé de transmission de données selon l'une quelconque des revendications 1 à 7.
